# EUROPEAN PATENT SPECIFICATION

(11) **EP 2 254 945 B1**
(45) Date of publication and mention of the grant of the patent: **25.07.2018**
(21) Application number: 09721106.4
(22) Date of filing: 26.02.2009
(51) Int. Cl.: C08L 23/12, C08L 23/08, C08L 23/10

(54) **CLARIFIED POLYPROPYLENE AND ETHYLENE ALPHA OLEFIN BLEND**
MISCHUNG AUS GEKLÄRTEM POLYPROPYLEN UND ETHYLEN-ALPHA-OLEFINEN
POLYPROPYLÈNE CLARIFIÉ ET MÉLANGE DE COPOLYMÈRES ÉTHYLÈNE-ALPHAOLÉFINE

(30) Priority: 12.03.2008 US 35940 P
(43) Date of publication of application: 01.12.2010
(73) Proprietor: Dow Global Technologies LLC, Midland, MI 48674 (US)
(72) Inventor: MCGIRK, Richard, H., Pearland TX 77584 (US); HUGHES, Morgan, M., Angleton TX 77515 (US)
(74) Representative: Boult Wade Tennant
(86) International application number: PCT/US2009/035236
(87) International publication number: WO 2009/114275

(56) References cited:
- EP-A- 0 877 050
- EP-A- 1 659 151
- WO-A-96/06132
- WO-A-2004/009657
- US-A1- 2007 197 712

## Description

### BACKGROUND

The present disclosure relates to clarified polypropylene compositions having improved impact resistance and methods for producing the same.

EP-A-1,659,151 relates to propylene polymer compositions comprising 50 to 70 wt% of a propylene homo- or copolymer, 5 to 20 wt% of a first elastomeric ethylene-propylene copolymer, 5 to 25 wt% of a second elastomeric ethylene-propylene copolymer and 5 to 30 wt% of an ethylene polymer.

EP-A-877,050 discloses a polypropylene composition comprising a first and a second ethylene alpha-olefin copolymer.

Clarified polypropylene is used in injection molded, blow molded, and thermoformed applications because of its relatively low cost, favorable processing properties, and ability to form an end product with clarity. Clarified polypropylene, however, has poor impact resistance, particularly at temperatures below ambient. Desirable would be a clarified polypropylene with favorable processing and clarity properties, the clarified polypropylene also having improved impact resistance.

### SUMMARY

The present disclosure provides polymeric compositions having clarified polypropylene and a plurality of ethylene and alpha-olefins compounded therewith to improve the impact resistance of the clarified polypropylene. The polymeric compositions of the present disclosure also exhibit low haze values. In an embodiment, a polymeric composition is provided. The polymeric composition includes a clarified polypropylene, a first ethylene and alpha-olefin copolymer, and a second ethylene and alpha-olefin copolymer. The polymeric composition may contain from 1 wt % to 75 wt % total ethylene and alpha-olefin content and from 25 wt % to 99 wt % clarified polypropylene.

The clarified polypropylene has a density. In a further embodiment, the first ethylene and alpha-olefin copolymer has a density greater than or equal to the clarified polypropylene density. The second ethylene and alpha-olefin copolymer has a density less than the clarified polypropylene density.

In an embodiment, the clarified polypropylene has a refractive index. At least one of the ethylene and alpha-olefin copolymers has a refractive index within about ±0.005 of the clarified polypropylene refractive index. Alternatively, both ethylene and alpha-olefin copolymers have a refractive index within about ±0.005 of the clarified polypropylene refractive index.

In an embodiment, the first and the second ethylene and alpha-olefins have an average density. The average density is within from 0.5% to 3% of the density value for the clarified polypropylene.

In an embodiment, another polymeric composition is provided. The polymeric composition includes a clarified random propylene copolymer, a first ethylene and alpha-olefin copolymer, and a second ethylene and alpha-olefin copolymer. The total ethylene and alpha-olefin copolymer content may be from 5 wt % to 45 wt % of the polymeric composition. The clarified random propylene copolymer may be present in an amount from 55 wt % to 95 wt % of the polymeric composition.

In an embodiment, the clarified random propylene copolymer has a density. The first ethylene and alpha-olefin copolymer has a density greater than or equal to the clarified random copolymer density. The second ethylene and alpha-olefin copolymer has a density less than the clarified random copolymer density.

In an embodiment, the first ethylene and alpha-olefin copolymer has a density greater than 0.90 g/cc. The second ethylene and alpha-olefin copolymer has a density less than 0.90 g/cc. The clarified random propylene copolymer may have a density of about 0.90 g/cc.

In an embodiment, at least one of the ethylene and alpha-olefin copolymers is a substantially linear ethylene and alpha-olefin copolymer. Alternatively, both the first ethylene and alpha-olefin copolymer and the second ethylene and alpha-olefin copolymer are substantially linear ethylene and alpha-olefin copolymers.

In an embodiment, the weight ratio of the first ethylene and alpha-olefin copolymer to the second ethylene alpha-olefin copolymer may be from 0.2:1 to 5:1. In a further embodiment, the polymeric composition contains an equal amount of the first ethylene and alpha-olefin copolymer and the second ethylene and alpha-olefin copolymer.

In an embodiment, the polymeric composition has a haze value from 10% to 20%. The polymeric composition may also have an Izod impact strength at 0°C from 2.67 J/cm (5ft-lb/in) to 8.01 J/cm (15ft-lb/in).

In an embodiment, a method for producing a polymeric composition is provided. The method includes selecting a first ethylene and alpha-olefin copolymer having a density greater than or equal to the density of a clarified polypropylene. The method also includes selecting a second ethylene and alpha-olefin copolymer having a density less than the clarified propylene density. The method further includes mixing the first ethylene and alpha-olefin copolymer and the second ethylene and alpha-olefin copolymer with the clarified polypropylene to form the polymeric composition. Selection of the first and second ethylene and alpha-olefin copolymers, and the clarified random propylene copolymer may be performed in order to form a polymeric composition having a haze value from 10% to 20% and an Izod impact strength at 0°C from 2.67 J/cm (5ft-lb/in) to 8.01 J/cm (15ft-lb/in).

In an embodiment, the method includes choosing the first ethylene and alpha-olefin copolymer and the second ethylene and alpha-olefin copolymer so that their average density is within 0.5% to 3% of the clarified propylene density. In a further embodiment, the method includes choosing at least one ethylene and alpha-olefin copolymer with a refractive index within about ±0.005 of the clarified polypropylene refractive index.

In an embodiment, another method for producing a polymeric composition is provided. The method includes compounding, mixing, or otherwise blending a first ethylene and alpha-olefin copolymer, a second ethylene and alpha-olefin copolymer and a clarifying agent with a random propylene copolymer. The method also includes forming a polymeric composition containing these components. Selection of the first and second ethylene and alpha-olefin copolymers, the random propylene copolymer, and the clarifying agent may be performed in order to form a polymeric composition having a haze value from 10% to 20% and an Izod impact strength at 0°C from 2.67 J/cm (5ft-lb/in) to 8.01 J/cm (15ft-lb/in).

In an embodiment, the method includes mixing the first ethylene and alpha-olefin copolymer, the second ethylene and alpha-olefin copolymer, and the clarifying agent substantially simultaneously with the random propylene copolymer.

An advantage of the present disclosure is the provision of an improved clarified polypropylene.

An advantage of the present disclosure is the provision of a clarified polypropylene with improved impact strength at low temperature, particularly at temperatures below ambient.

An advantage of the present disclosure is the provision of a clarified polypropylene with improved impact strength and a low haze value.

### BRIEF DESCRIPTION OF THE DRAWINGS

Figure 1 is a graph showing the haze value of a polymeric composition of the present disclosure.
Figure 2 is a graph showing the Izod impact strength of a polymeric composition of the present disclosure.

### DETAILED DESCRIPTION

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, melt index, etc., is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (*e.g.*, 1.1, 1.5, etc.), one unit is considered to be 0.0001, 0.001, 0.01 or 0.1, as appropriate. For ranges containing single digit numbers less than ten (*e.g.*, 1 to 5), one unit is typically considered to be 0.1. These are only examples of what is specifically intended, and all possible combinations of numerical values between the lowest value and the highest value enumerated, are to be considered to be expressly stated in this application. For example, any numerical range recited herein includes values "greater than" or "greater than or equal to" the lower value. Similarly, any numerical range recited herein includes values that are "less than" or "less than or equal to" the upper value. In other words, any numerical range recited herein includes any value or subrange within the stated range. Numerical ranges have been recited, as discussed herein, in reference to density, weight percent of component, molecular weights and other properties,

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

As discussed above, the term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers,

The terms "blend" or "polymer blend," as used herein, mean a composition of two or more polymers. Such a blend may or may not be miscible. Such a blend may or may not be phase separated. Such a blend may or may not contain one or more domain configurations, as determined from transmission electron spectroscopy.

The present disclosure is directed to polymeric and/or thermoplastic compositions and methods for making the same. In an embodiment, a polymeric composition is provided. The polymeric composition includes a clarified polypropylene and a plurality of ethylene and alpha-olefin copolymers such as two, three, four, five, six or more ethylene and alpha-olefin copolymers. For example, the polymeric composition may include a first ethylene and alpha-olefin copolymer, and a second ethylene and alpha-olefin copolymer. The polymeric composition exhibits improved impact performance compared to the clarified polypropylene alone. The polymeric composition also has acceptable haze values.

As used herein, "a clarified polypropylene" is a polypropylene homopolymer or a random propylene copolymer with a clarifying agent blended or mixed therein. As used herein, "a clarifying agent" is a composition that when added to a polyolefin increases nucleation density during polyolefin crystallization. Not wishing to be bound by any particular theory, it is believed that the clarifying agent increases the number of nucleation sites, thereby increasing the rate of nucleation for more ordered and faster polyolefin crystallization. Spherulites that form at the nucleation sites are more uniform and are smaller in size than spherulites formed in the absence of the clarifying agent. This yields smaller and more dispersed crystals that scatter less light to improve the optical opacity of the polyolefin. In this way, the clarifying agent improves the optical opacity of the polypropylene.

The clarified polypropylene may have a melt flow rate (MFR) from 0.5 g/10 min to 40 g/10 min, or from 1.0 g/10 min to 35 g/10 min. The clarified polypropylene has a density from 0.895 g/cc to 0.910 g/cc, or from 0.900 g/cc to 0.905 g/cc. In an embodiment, the clarified polypropylene is a polypropylene suitable for injection molding and has an MFR from 5 g/10 min to 40 g/10 min.

The clarifying agent may be a (benzylidene)sorbitol, a benzoate salt, a sodium diaryl phosphate, or a finely divided talc. The clarifying agent is present in an amount from 1 ppm to 3000 ppm, or from 5 ppm to 2500 ppm, or from 10 ppm to 2000 ppm. Nonlimiting examples of suitable clarifying agents include dibenzylidene sorbitol acetal derivatives such as 1,3-O-2,4-bis(3,4-dimethylbenzylidene)sorbitol, (from Milliken Chemical Spartanburg, SC and known as Millad® 3988), 1,3-O-2,4-bis(p-methylbenzylidene)sorbitol, (also available from Milliken Chemical and known as Millad® 3940), sodium 2,2'-methylene-bis-(4,6-di-tert-butylphenyl) phosphate (from Asahi Denka Kogyo K. K., known as NA-11), aluminum bis[2,2'-methylene-bis-(4,6-di-tert-butylphenyl)phosphate] with lithium myristate (also from Asahi Denka Kogyo K. K., known as NA-21), or other nucleators, particularly those which provide extremely quick crystal formation and/or arrangement. The clarified polypropylene may include optional additives such as plasticizers, antistatic agents, antioxidants, stabilizers, acid neutralizers, and ultraviolet absorbers.

In an embodiment, the clarified polypropylene is a clarified polypropylene homopolymer. The clarified polypropylene homopolymer may have a refractive index of about 1.5065 at 589 nm. Refractive index may be measured using an Abbe-3L Refractometer made by Milton Roy Company and operated at 589 nm (sodium "d" line). Samples are prepared for testing in the refractometer by injection molding the polymer in a BOY 30T injection molder to a thickness of about 0.318 cm (0.125 inches). The samples tested for physical properties are prepared in the same manner and also at a thickness of about 0.318 cm (0.125 inches). Refractive index is measured at room temperature (e.g., from 20-30°C). Nonlimiting examples of suitable clarified polypropylene homopolymers include Dow H110-02N (MFR 2.0 g/10 min, density 0.900 g/cc) and Atofina 3289MZ (MFR 1.8 g/10 min, density 0.905 g/cc).

In an embodiment, the clarified polypropylene is a clarified random propylene copolymer containing a propylene comonomer and a C₂-C₁₀ alpha-olefin comonomer randomly inserted between the propylene groups with a clarifying agent blended or mixed therein. The alpha-olefin comonomer may be present in an amount from 0.10 wt % to 7.0 wt %, or from 0.15 wt. % to 4 wt %, or from 0.6 wt % to 4 wt %, or from 0.2 wt % to 3 wt %, or from 0.2 wt % and to 2 wt %. In an embodiment, the C₂-C₁₀ alpha-olefin comonomer is ethylene present in an amount from 2 wt % to 4 wt %.

In an embodiment, the clarified random propylene copolymer has a refractive index of about 1.5044 at 589 nm. Nonlimiting examples of suitable clarified polypropylene include BP Amoco 8249, Montell SR256M (MFR 2.0 g/10 min, density 0.900 g/cc), Quantum PP7352KF, Phillips Sumika Marlex® RMN-020 (MFR 2.0 g/10 min, density 0.905 g/cc), Dow 6D83K (MFR 1.9 g/10 min, density 0.900 g/cc), Dow 6D20 (MFR 1.9 g/10 min, density 0.900 g/cc), Atofina 7525MZ (MFR 10 g/ 10 min, density 0.900 g/cc), and Dow 6D75K (MFR 35 g/10 min, density 0.900 g/cc). With respect to the foregoing clarified polypropylene homopolymers and the clarified random propylene copolymers, the melt flow rate (MFR) is determined in accordance with ASTM D-1238 and the density is determined in accordance with ASTM D-1505.

The polymeric composition also includes a plurality of ethylene and alpha-olefin copolymers such as a first ethylene and alpha-olefin copolymer and a second ethylene and alpha-olefin copolymer. Although first and second ethylene and alpha-olefin copolymers are described herein, it is understood that the polymeric composition may include three, four, five, or six or more ethylene and alpha-olefin copolymers. As used herein, "an ethylene and alpha-olefin copolymer" (also referred to as an "EAO polymer" or as an "EAO") is a copolymer or interpolymer containing a major proportion of ethylene monomer and one or more C₃-C₂₀ alpha-olefin monomers. The EAO may be made with single-site catalysts, constrained geometry catalysts, or metallocene catalysts. Exemplary alpha-olefins include, but are not limited to, propylene, 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl- 1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexene and vinylnorbornene.

Nonlimiting examples of suitable ethylene and α-olefin copolymers include ethylene/propylene copolymers, ethylene/butene copolymers, ethylene/octene copolymers and ethylene/propylene/diene modified interpolymers. The ethylene and alpha-olefin copolymer may have a density in the range of 0.850 g/cc to 0.980 g/cc, or from 0.870 g/cc to 0.902 g/cc.

The EAO may be an ultra low density linear polyethylene (ULDPE) (for example, Attane™ made by The Dow Chemical Company), a homogeneously branched, linear EAO polymer (for example Tafmer™ by Mitsui Petrochemicals Company Limited and Exact™ by Exxon Chemical Company), or a substantially linear EAO polymer (for example the Affinity™ polymers and/or the Engage® polymers available from The Dow Chemical Company). It is understood that any EAO with a high molecular weight, a low crystallinity, a low glass transition temperature, and a narrow molecular weight distribution may also be utilized in the polymeric composition.

In an embodiment, the EAO is a linear ethylene and alpha-olefin copolymer. A "linear ethylene and alpha-olefin copolymer" is a polymer that has an absence of long chain branching, as for example the linear low density polyethylene polymers or linear high density polyethylene polymers made using uniform branching (that is, homogeneously branched) distribution polymerization processes (for example, U.S. Patent No. 3,645,992 to Elston), and are those in which the comonomer is randomly distributed within a given interpolymer molecule, and wherein substantially all of the interpolymer molecules have the same ethylene/comonomer ratio within that interpolymer. This is in contrast to heterogeneously branched interpolymers, typically produced by Ziegler-Natta type catalysts, and containing a non-homogeneous distribution of comonomer among the molecules of the interpolymer. The term "linear ethylene/α-olefin polymers" does not refer to high pressure branched polyethylene, which is known to those skilled in the art to have numerous long chain branches.

In an embodiment, the ethylene and alpha-olefin copolymer is a substantially linear ethylene and alpha-olefin copolymer. As used herein, a "substantially linear ethylene and alpha-olefin copolymer" (or "SLEP") is a homogeneous polymer having long chain branching. A SLEP typically has a backbone substituted with from 0.01 to 3 long-chain branches per 1000 carbons in the backbone, or from 0.01 long chain branches/1000 carbons to 1 long chain branch/1000 carbons, or from 0.05 long chain branches/1000 carbons to 1 long chain branch/1000 carbons. The comonomer(s) is typically randomly distributed within the SLEP, and substantially all of the inter- or co-polymer molecules have the same ethylene/comonomer ratio within that inter- or co-polymer. In addition, a SLEP typically has a single melting peak, as opposed to heterogeneously branched linear ethylene polymers, which have two or more melting peaks. A SLEP further typically has a uniform distribution of comonomer, such that the comonomer content of polymer fractions, across the molecular weight range of the SLEP varies by less than 10 weight percent, or less than 8 weight percent, or less than 5 weight percent, and even more preferably less than 2 weight percent. "Long-chain branching" is a chain length that exceeds that of the alpha-olefin component of the EAO copolymer.

SLEPs are disclosed in U.S. Patent Nos. 5,272,236 and 5,278,272. SLEPs can be prepared via the solution, slurry, or gas phase polymerization of ethylene and one or more optional alpha- olefin comonomers in the presence of a constrained geometry catalyst, such as the catalyst disclosed in U.S. Pat. No. 5,132,380, incorporated herein by reference. SLEPs are available as polymers made by the Insite™ Process and Catalyst Technology such as Engage® polyolefin elastomers commercially available from DuPont Dow Elastomers LLC and Affinity™ polyolefin plastomers commercially available from The Dow Chemical Company. Nonlimiting examples include Affinity™ FM-1570, Affinity™ HM 1100, and Affinity™ SM 1300. In an embodiment, the EAO may have a density (measured in accordance with ASTM D-1505 or ASTM D-792) from 0.85 g/cc to 0.92 g/cc, or from 0.85 g/cc to 0.90 g/cc.

Further nonlimiting examples of suitable SLEPs are set forth in Table 1 below.

### TABLE 1

**Table 1. Engage® ethylene alpha-olefins (EAOs)**

| **EAO** | **COMONOMER** | **DENSITY** | **MI 2; 190°C** | **ETA*, P 0.1 RAD/SEC** | **ETA*, 100 RAD/SEC** |
|---|---|---|---|---|---|
| 8100 | Octene | 0.870 | 1.0 | 93,956 | 17,560 |
| 8003 | Octene | 0.885 | 1.0 | 83,940 | 16,977 |
| 8401 | Octene | 0.885 | 30 | -- | -- |
| 8440 | Octene | 0.897 | 1.6 | 86,239 | 15,390 |
| 8480 | Octene | 0.902 | 1.0 | 108,340 | 15,334 |
| 8450 | Octene | 0.902 | 3.0 | 33,931 | 9,614 |
| 8402 | Octene | 0.902 | 30 | 2,578 | 1,985 |
| 7256 | Butene | 0.885 | 2.0 | -- | -- |

In an embodiment, the clarified polypropylene and the EAOs each have a respective density. The density of the first EAO is greater than, equal to, or greater than or equal to, the density of the clarified polypropylene density. The density of the second EAO copolymer is less than, or equal to, or less than or equal to, the density of the clarified polypropylene.

In a further embodiment, the first and second EAOs may be selected such that the average density for the EAOs is within from about 0.01% to about 3%, or from about 0.1% to about 2% of the density value for the clarified polypropylene. For example, the clarified polypropylene may have a density of 0.902 g/cc. The first EAO may have a density of 0.905 g/cc and the second EAO may have a density of 0.897 g/cc yielding an average EAO density within 3%, or specifically within 0.1%, of the clarified polypropylene density. The applicants have surprisingly discovered that compounding a plurality EAOs with an average density within this range advantageously increases the impact strength of the clarified polypropylene without negatively affecting haze.

In an embodiment, the clarified polypropylene and the EAOs each have a respective refractive index. The refractive index of at least one of the EAOs is +/- 0.005 refractive index units (or any value or subrange therebetween), or within about +/- 0.003, or within about +/-0.0010 refractive index units of the refractive index for the clarified polypropylene. In a further embodiment, the refractive index for both the first EAO and the second EAO is within the aforementioned refractive index ranges for the clarified polypropylene. In a further embodiment, the refractive index for the clarified polypropylene may be about 1.5065 and the refractive index for the first and/or the second EAO may be within +/-0.005 refractive index units of 1.5065.

The polymeric composition may contain from 1% weight to 75% weight of total EAO content (*i.e.,* the weight percent of the first EAO and the second EAO). The polymeric composition may contain from 25 % weight to 99 % weight of the clarified polypropylene. The polymeric composition may have a melt flow rate from 5 g/10 minutes to 40 g/10 minutes as determined by ASTM-D1238 at 230°C/2.16 kg. The polymeric composition may also have a density from 0.880 g/cc to 0.899 g/cc as determined by ASTM D-792. The polymeric composition has a notched Izod impact strength at 23°C (ASTM D256) from 5.34 J/cm (10 ft-lb/in) to 10.7 J/cm (20 ft-lb/in) (or any value or subrange therebetween), a notched Izod impact strength to 0°C (ASTM D256) from 2.67 J/cm (5 ft-lb/in) to 8.01 J/cm (15 ft-lb/in) (or any value or subrange therebetween). The polymeric composition has a haze value (ASTM D1003, 0.8128 mm (32 mils)) from 10% to 20% (or any value or subrange therebetween).

In an embodiment, another polymeric composition is provided. The polymeric composition includes a clarified random propylene copolymer. The polymeric composition further includes a plurality of EAOs, such as a first EAO and a second EAO as discussed above. The clarified random propylene copolymer may be any clarified random propylene copolymer as discussed herein. The relationships between the first/second EAOs and the clarified random propylene copolymer with respect to density (including average density) and refractive index may be the same as the relationships between the first/second EAOs and the clarified polypropylene for density and refractive index as discussed above. In an embodiment, the first EAO has a density greater than 0.90 g/cc and the second EAO has a density less than 0.90 g/cc. In yet a further embodiment, the clarified random propylene copolymer has a density of about 0.90 g/cc, or 0.90 g/cc.

In an embodiment, the clarified random propylene copolymer has a density of about 0.90 g/cc and a refractive index of about 1.5044 at 589 nm. Thus, one (or both) EAO(s) may be selected such that its (their) density and/or its (their) refractive index is substantially similar to, or similar to, the density/refractive index of the clarified random propylene copolymer as discussed above.

In an embodiment, at least one of the EAOs is a substantially linear ethylene and alpha-olefin copolymer. Alternatively, the first EAO and the second EAO are each substantially linear ethylene and alpha-olefin copolymers. The total EAO content for the polymeric composition may be from 5 wt % to 45 wt %, or from 10 wt % to 40 wt %, or about 30 wt % of the polymeric composition. The weight ratio between the first EAO and the second EAO may be from 0.2:1 to 5:1. In an embodiment, the polymeric composition contains an equal amount of the first EAO and the second EAO.

In an embodiment, the polymeric composition has a haze value from 10% to 20%, or from 11% to 15%. The term "haze" as used herein refers to the percentage of light which, in passing through the sample, deviates from the incident beam average, as measured using the protocol described in ASTM D-1003 for a sample with a thickness of 0.8128 mm (32 mils). The polymeric composition may also have an Izod impact strength at 0°C from 2.67 J/cm (5 ft-lb/in) to 8.01 J/cm (15 ft-lb/in), or from 3.20 J/cm to 4.27 J/cm (8 ft-lb/in). In addition, the polymeric composition may have an Izod impact strength at 23°C from 5.34 J/cm (0.0 ft-lb/in) to 10.7 J/cm (20.0 ft-lb/in). Izod impact strength is determined in accordance with ASTM D-256.

In an embodiment, a method for producing a polymeric composition is provided. The method includes providing a clarified polypropylene. The clarified polypropylene has a density. The method includes selecting a first ethylene and alpha-olefin copolymer having a density greater than or equal to the clarified polypropylene density and selecting a second ethylene and alpha-olefin copolymer having a density less than the clarified propylene density. The method further includes mixing the first ethylene and alpha-olefin copolymer and the second ethylene and alpha-olefin copolymer with the clarified polypropylene to form the polymeric composition.

The clarified polypropylene may be any clarified polypropylene as previously discussed herein. In an embodiment, the clarified polypropylene is a clarified random propylene copolymer. The first ethylene and alpha-olefin copolymer and the second ethylene and alpha-olefin copolymer may be any EAO as disclosed herein. In an embodiment, at least one EAO is a SLEP.

In an embodiment, the method includes choosing the first ethylene and alpha-olefin copolymer and the second ethylene and alpha-olefin copolymer so that their average density is within 0.01% to 3% of the clarified propylene density. It is understood that the method may include selecting a plurality of EAOs *(i.e.,* three, four, five, six, or more EAOs) with an average density within 0.01% to 3% of the clarified polypropylene density and mixing the plurality of the EAOs with the clarified polypropylene to form the polymeric composition.

The mixing of the EAOs with the clarified polypropylene may occur in any order as desired. In an embodiment, the method includes blending, mixing, or otherwise compounding the first ethylene and alpha-olefin copolymer with the second ethylene and alpha-olefin copolymer to form an EAO compound. The EAO compound may then be mixed with the clarified polypropylene. Alternatively, the first EAO, the second EAO, and the clarified polypropylene may be simultaneously mixed together to form the polymeric composition.

In an embodiment, the first EAO, the second EAO and the clarified polypropylene may be compounded in an extruder to form the polymeric composition (extrusion blended). The polymeric composition may be subsequently extruded, molded or thermoformed into a film or other product. Alternatively, the first EAO, the second EAO and the clarified polypropylene may be dry blended or melt blended.

In an embodiment, the selection of the first EAO and the second EAO and the mixing thereof with the clarified polypropylene forms a polymeric composition having a haze value from 10% to 20% and an Izod impact strength at 0°C from 2.67 J/cm (5ft-lb/in) to 8.01 J/cm (15 ft-lb/in).

In an embodiment, another method for producing a polymeric composition is provided. The method includes providing a random propylene copolymer. The method also includes compounding, mixing or blending a first ethylene and alpha-olefin copolymer, a second ethylene and alpha-olefin copolymer and a clarifying agent with the random propylene copolymer. The method further includes forming the polymeric composition. The polymeric composition has a haze value from 10% to 20% and an Izod impact strength at 0°C from 2.67 J/cm (5 ft-lb/in) to 8.01 J/cm (15 ft-lb/in).

The random propylene copolymer contains a major proportion of propylene comonomer and a C₂-C₁₀ alpha-olefin comonomer randomly inserted between the propylene groups. The alpha-olefin comonomer may be present in an amount from 0.10 wt % to 7.0 wt %, or from 0.15 wt. % to 4 wt %, or from 0.6 wt % to 4 wt %, or from 0.2 wt % to 3 wt %, or from 0.2 wt % and to 2 wt %. In an embodiment, the C₂-C₁₀ alpha-olefin comonomer is ethylene present in an amount from 2 wt % to 4 wt %.

In an embodiment, the method includes mixing the first ethylene and alpha-olefin copolymer, the second ethylene and alpha-olefin copolymer, and the clarifying agent substantially simultaneously, or simultaneously, with the random propylene copolymer. Alternatively, the clarifying agent may be mixed with the random propylene copolymer to form a clarified random propylene copolymer. The clarified random propylene copolymer may then be mixed with the first EAO and the second EAO.

The polymeric compositions of the present disclosure are suitable for extrusion, blow molding, extrusion blow molding, injection molding, injection blow molding, injection stretch blow molding, and thermoforming applications, The present polymeric compositions may be formed into a product by any of the foregoing applications. Nonlimiting examples of products formed with the present polymeric compositions include containers for beverages, cosmetics, foods, and cleaners; media packaging (DVD and CD cases); medical devices such as syringes and tubing; containers for medical solutions and medical products (pills, vitamins); labware (beakers, flasks); and storage containers. Any of the foregoing products may be colored or uncolored as desired,

By way of example and not limitation, examples of the present disclosure will now be given.

### EXAMPLES

The compositions in Tables 2 and 3 are compounded on a ZSK-25 mm twin screw extruder. The ZSK-25 mm Werner-Pfleiderer extruder is equipped with a mixing screw (48 L/D), several loss-in-weight feeders, a strand die, a chilled water bath, and an air knife and strand cutter (pelletizer). Typical extrusion process conditions for the blends are shown below. These process conditions are typical for all of the compositions.

**Twin Screw Extruder Conditions**

| Temperature, °C | | |
|---|---|---|
| | Zone 1 | 120 |
| | Zone 2 | 200 |
| | Zone 3 | 200 |
| | Zone 4 | 200 |
| | Zone 5 | 200 |
| | Zone 6 | 200 |
| | Zone 7 | 200 |
| | Zone 8 | 180 |

| Feed | | |
|---|---|---|
| | 15.88 kg/hr (35 lbs/hr) | |

| System | | |
|---|---|---|
| | RPM | 500 |
| | Die | 2.17 to 2.76 MPa (315 - 400PSI) |
| | Melt | 215°C |

The injection molder is an Arburg 370C equipped with an ASTM family mold. Typical injection molding conditions for the blends are shown below. The injection molded specimens are conditioned for 3 days at ASTM conditions (∼24°C) before testing. All specimens are tested according to ASTM procedures.

**Arburg Injection Molder**

| Barrel Temperatures, | | °C (°F) |
|---|---|---|
| | Feed | 149 (300) |
| | Zone 2 | 191 (375) |
| | Zone 3 | 232 (450) |
| | Zone 4 | 232 (450) |
| | Nozzle | 232 (450) |

| Extruder | | |
|---|---|---|
| | RPM | 50 |
| | Backpressure | 1 MPa (10 bar) |
| | Dosage | 65 ccm |

| Injection | | |
|---|---|---|
| | Velocity | 40 |
| | Xfer Position | 20 |
| | Pressure | 4.14 MPa (600 PSI) |
| Shot Mass | | 42g |
| Mold Temp | | 37.8°C (100°F) |

Table 2 below provides an example of apolymeric composition of the

**TABLE 2**

| **SAMPLE # (WT%)** | **1** | **2** | **5** | **6** | **7** | **9** | **11** |
|---|---|---|---|---|---|---|---|
| Clarified random copolymer¹ | 85 | 70 | 70 | 70 | 85 | 70 | 100 |
| Engage 8450² | 15 | 30 | 15 | -- | -- | -- | 0 |
| Engage 8100³ | -- | -- | 15 | 30 | 15 | -- | -- |
| Engage 8003⁴ | -- | -- | -- | -- | -- | 30 | -- |

| | | | | | | | |
|---|---|---|---|---|---|---|---|
| 1 = Atofina 7525MZ 2 = Engage 8450, ethylene-octene copolymer, density 0.902 gm/cc 3 = Engage 8100, ethylene-octene copolymer, density 0.870 gm/cc 4 = Engage 8003, ethylene-octene copolymer, density 0.885 gm/cc | | | | | | | |

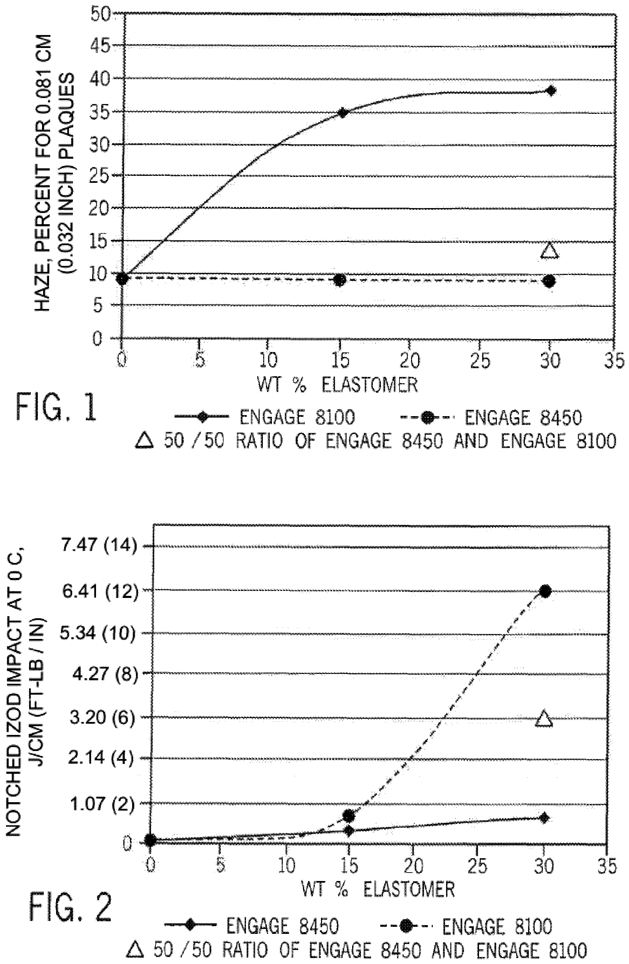

Table 3 provides properties for the polymeric compositions set forth in Table 2. In addition, Figures 1 and 2 respectively depict the haze value and the Izod impact strength value for the polymeric composition of Sample 5.

**TABLE 3**

| Sample | 1 | 2 | 5 | 6 | 7 | 9 | 11 |
|---|---|---|---|---|---|---|---|
| | | | | | | | |
| Haze (ASTM D1003) | | | | | | | |
| Haze, % 3.175 mm (125 mils) | 41.9 | 40.41 | 67.2 | 86.4 | 85.1 | 72.3 | 36.7 |
| Haze, % 0.8128 mm (32 mils) | 9.1 | 8.9 | 14.2 | 38.9 | 35.1 | 17.0 | 9.3 |
| Dynatup Impact Tester @ 23°C (ASTM D5628) | | | | | | | |
| Total Energy, J (ft lbf) | 56.1 (41.4) | 51.1 (37.7) | 53.0 (39.1) | 48.3 (35.6) | 53.8 (39.7) | 54.0 (39.8) | 54.2(40.0) |
| | | | | | | | |
| Izod Impact Strength @23°C (ASTM D256) | | | | | | | |
| 23°C Strength, J/cm (fl/lb/in) | 1.33 (2.5) | 5.61 (10.5) | 6.09 (11.4) | 6.09 (11.4) | 1.92(3.6) | 6.51 (12.2) | 0.854 (1.6) |
| °C Strength, J/cm (ft/Ib/in) | 0.320(0.6) | 0.801 (1.5) | 3.21 (6.02) | 6.42 (12.03) | 0.747 (1.40) | 5.56 (10.42) | 0.107(0.2) |
| 3-Point Flex (ASTM D790) | | | | | | | |
| 2% Secant Modulus, MPa (PSI) | 803.1 (116,487) | 654.2 (94,877) | 591.0 (85,720) | 566.4 (82,156) | 755.0 (109,508) | 591.1 (85,738) | 990.8 (143,707) |
| Tensile Strength @2"/min (ASTM D638) | | | | | | | |
| Tensile @Break, MPa (PSI) | 16.13 (2340) | 20.11 (2917) | 18.77 (2722) | 17.15 (2487) | 18.46 (2678) | 19.51 (2829) | 20.75 (3010) |
| Ultimate Elongation, % | 354 | 387 | 393 | 395 | 397 | 396 | 395 |
| Tensile @ Yield, MPa (PSI) | 24.21 (3511) | 20.68 (2999) | 18.90 (2741) | 17.85 (2589) | 22.95 (3329) | 19.55 (2835) | 28.56 (4143) |
| Elongation @ Yield, % | 11.5 | 12.3 | 13.4 | 13.7 | 12.3 | 12.9 | 10.9 |

## Claims

1. A polymeric composition comprising:
a clarified polypropylene;
a first ethylene and alpha-olefin copolymer having a density greater than the density of the clarified polypropylene; and
a second ethylene and alpha-olefin copolymer having a density less than the density of the clarified polypropylene, wherein the polymeric composition has an Izod impact strength at 0°C from 2.67 J/cm (5 ft-lb/in) to 8.01 J/cm (15 ft-lb/in) as measured in accordance with ASTM D256 and a haze value from 10% to 20% as measured in accordance with ASTM D1003, 08128 mm (32 mils).

2. The polymeric composition of claim 1 wherein the first ethylene and alpha-olefin copolymer and the second ethylene and alpha-olefin copolymer have an average density, and the average density is within from 0.5% to 3% of the density value for the clarified polypropylene.

3. The polymeric composition of claim 1 comprising from 1 wt % to 75 wt % total ethylene and alpha-olefin copolymer content.

4. The polymeric composition of any of claims 1-3 wherein the clarified polypropylene is a clarified random propylene copolymer comprising random propylene copolymer and from 1 ppm to 3000 ppm of a clarifying agent.

5. The polymeric composition of any of claims 1-4 wherein the first ethylene and alpha-olefin copolymer has a density greater than 0.90 g/cc and the second ethylene and alpha-olefin copolymer has a density less than 0.90 g/cc.

6. The polymeric composition of any of claims 1-5 wherein at least one of the ethylene and alpha-olefin copolymers is a substantially linear ethylene and alpha-olefin copolymer.

7. The polymeric composition of any of claims 1-6 wherein the total ethylene and alpha-olefin content is from 5 wt % to 45 wt % of the polymeric composition.

8. The polymeric composition of any of claims 1-7 wherein the weight ratio of the first ethylene and alpha-olefin copolymer to the second ethylene alpha-olefin copolymer is from 0.2:1 to 5:1.

9. The polymeric composition of any of claims 1-8 comprising an equal amount of the first ethylene and alpha-olefin copolymer and the second ethylene and alpha-olefin copolymer.

10. The polymeric composition of any of claims 1-9 wherein the clarified polypropylene has a density of 0.90 g/cc.

11. The polymeric composition of claim 1 wherein the clarified polypropylene is a clarified random propylene copolymer having a refractive index and at least one of the ethylene and alpha-olefin copolymers has a refractive index of 1.5044 at 589 nm within about ±0.005 of the clarified polypropylene copolymer refractive index.

12. The polymeric composition of claim 1 wherein the clarified polypropylene has a melt flow rate from 0.5 g/10 min to 40 g/10 min as measured in accordance with ASTM D-1238, and a density from 0.900 g/cc to 0.905 g/cc as measured in accordance with ASTM D-1505.

## Patentansprüche

1. Eine Polymerzusammensetzung, die Folgendes beinhaltet:
ein geklärtes Polypropylen;
ein erstes Ethylen-und-alpha-Olefin-Copolymer, das eine größere Dichte als die Dichte des geklärten Polypropylens aufweist; und
ein zweites Ethylen-und-alpha-Olefin-Copolymer, das eine geringere Dichte als die Dichte des geklärten Polypropylens aufweist, wobei die Polymerzusammensetzung eine Schlagbiegefestigkeit nach Izod bei 0 °C von 2,67 J/cm (5 ft-Ib/in) bis 8,01 J/cm (15 ft-Ib/in), wie gemäß ASTM D256 gemessen, und einen Trübungswert von 10 % bis 20 %, wie gemäß ASTM D1003, 08128 mm (32 mil), gemessen, aufweist.

2. Polymerzusammensetzung gemäß Anspruch 1, wobei das erste Ethylen-und-alpha-Olefin-Copolymer und das zweite Ethylen-und-alpha-Olefin-Copolymer eine Durchschnittsdichte aufweisen und die Durchschnittsdichte innerhalb von 0,5 % bis 3 % des Dichtewertes für das geklärte Polypropylen liegt.

3. Polymerzusammensetzung gemäß Anspruch 1, die einen Gesamtgehalt an Ethylen-und-alpha-Olefin-Copolymer von 1 Gew.-% bis 75 Gew.-% beinhaltet.

4. Polymerzusammensetzung gemäß einem der Ansprüche 1-3, wobei das geklärte Polypropylen ein geklärtes statistisches Propylencopolymer ist, das statistisches Propylencopolymer und zu 1 ppm bis 3000 ppm ein Klärmittel beinhaltet.

5. Polymerzusammensetzung gemäß einem der Ansprüche 1-4, wobei das erste Ethylen-und-alpha-Olefin-Copolymer eine Dichte von mehr als 0,90 g/cm³ aufweist und das zweite Ethylen-und-alpha-Olefin-Copolymer eine Dichte von weniger als 0,90 g/cm³ aufweist.

6. Polymerzusammensetzung gemäß einem der Ansprüche 1-5, wobei mindestens eines der Ethylen-und-alpha-Olefin-Copolymere ein im Wesentlichen lineares Ethylen-und-alpha-Olefin-Copolymer ist.

7. Polymerzusammensetzung gemäß einem der Ansprüche 1-6, wobei der Gesamtgehalt an Ethylen-und-alpha-Olefin-Copolymer von 5 Gew.-% bis 45 Gew.-% der Polymerzusammensetzung beträgt.

8. Polymerzusammensetzung gemäß einem der Ansprüche 1-7, wobei das Gewichtsverhältnis des ersten Ethylen-und-alpha-Olefin-Copolymers zu dem zweiten Ethylen-und-alpha-Olefin-Copolymer von 0,2 : 1 bis 5 : 1 beträgt.

9. Polymerzusammensetzung gemäß einem der Ansprüche 1-8, die eine gleiche Menge des ersten Ethylen-und-alpha-Olefin-Copolymers und des zweiten Ethylen-und-alpha-Olefin-Copolymers beinhaltet.

10. Polymerzusammensetzung gemäß einem der Ansprüche 1-9, wobei das geklärte Polypropylen eine Dichte von 0,90 g/cm³ aufweist.

11. Polymerzusammensetzung gemäß Anspruch 1, wobei das geklärte Polypropylen ein geklärtes statistisches Propylencopolymer ist, das einen Brechungsindex aufweist, und mindestens eines der Ethylen-und-alpha-Olefin-Copolymere bei 589 nm einen Brechungsindex von 1,5044 aufweist, der innerhalb von etwa ± 0,005 des Brechungsindex des geklärten Polypropylencopolymers liegt.

12. Polymerzusammensetzung gemäß Anspruch 1, wobei das geklärte Polypropylen einen Schmelzdurchfluss von 0,5 g/10 min bis 40 g/10 min, wie gemäß ASTM D-1238 gemessen, und eine Dichte von 0,900 g/cm³ bis 0,905 g/cm³, wie gemäß ASTM D-1505 gemessen, aufweist.

## Revendications

1. Une composition polymère comprenant :
un polypropylène clarifié ;
un premier copolymère d'éthylène et d'alpha-oléfine ayant une masse volumique supérieure à la masse volumique du polypropylène clarifié ; et
un deuxième copolymère d'éthylène et d'alpha-oléfine ayant une masse volumique inférieure à la masse volumique du polypropylène clarifié, la composition polymère ayant une résistance au choc Izod à 0 °C de 2,67 J/cm (5 pi-Ib/po) à 8,01 J/cm (15 pi-Ib/po) telle que mesurée conformément à l'ASTM D256 et une valeur de trouble de 10 % à 20 % telle que mesurée conformément à l'ASTM D1003, 08128 mm (32 mils).

2. La composition polymère de la revendication 1 dans laquelle le premier copolymère d'éthylène et d'alpha-oléfine et le deuxième copolymère d'éthylène et d'alpha-oléfine ont une masse volumique moyenne, et la masse volumique moyenne se trouve dans les limites de 0,5 % à 3 % de la valeur de masse volumique pour le polypropylène clarifié.

3. La composition polymère de la revendication 1 comprenant de 1 % en poids à 75 % en poids de la teneur totale en copolymère d'éthylène et d'alpha-oléfine.

4. La composition polymère de n'importe lesquelles des revendications 1 à 3 dans laquelle le polypropylène clarifié est un copolymère de propylène aléatoire clarifié comprenant un copolymère de propylène aléatoire et de 1 ppm à 3 000 ppm d'un agent clarifiant.

5. La composition polymère de n'importe lesquelles des revendications 1 à 4 dans laquelle le premier copolymère d'éthylène et d'alpha-oléfine a une masse volumique supérieure à 0,90 g/cm³ et le deuxième copolymère d'éthylène et d'alpha-oléfine a une masse volumique inférieure à 0,90 g/cm³.

6. La composition polymère de n'importe lesquelles des revendications 1 à 5 dans laquelle au moins l'un des copolymères d'éthylène et d'alpha-oléfine est un copolymère d'éthylène et d'alpha-oléfine substantiellement linéaire.

7. La composition polymère de n'importe lesquelles des revendications 1 à 6 dans laquelle la teneur totale en éthylène et alpha-oléfine va de 5 % en poids à 45 % en poids de la composition polymère.

8. La composition polymère de n'importe lesquelles des revendications 1 à 7 dans laquelle le rapport en poids du premier copolymère d'éthylène et d'alpha-oléfine au deuxième copolymère d'éthylène et d'alpha-oléfine va de 0,2/1 à 5/1.

9. La composition polymère de n'importe lesquelles des revendications 1 à 8 comprenant une quantité égale du premier copolymère d'éthylène et d'alpha-oléfine et du deuxième copolymère d'éthylène et d'alpha-oléfine.

10. La composition polymère de n'importe lesquelles des revendications 1 à 9 dans laquelle le polypropylène clarifié a une masse volumique de 0,90 g/cm³.

11. La composition polymère de la revendication 1 dans laquelle le polypropylène clarifié est un copolymère de propylène aléatoire clarifié ayant un indice de réfraction et au moins l'un des copolymères d'éthylène et d'alpha-oléfine a un indice de réfraction de 1,5044 à 589 nm dans les limites d'environ ±0,005 de l'indice de réfraction du copolymère de polypropylène clarifié.

12. La composition polymère de la revendication 1 dans laquelle le polypropylène clarifié a un indice de fluidité à chaud de 0,5 g/10 min à 40 g/10 min tel que mesuré conformément à l'ASTM D-1238, et une masse volumique de 0,900 g/cm³ à 0,905 g/cm³ telle que mesurée conformément à l'ASTM D-1505.
